# EUROPEAN PATENT APPLICATION

(11) **EP 2 819 082 A1**
(43) Date of publication of application: **31.12.2014**
(21) Application number: 14174510.9
(22) Date of filing: 26.06.2014
(51) Int. Cl.: G06Q 20/32, G06Q 20/38

(54) **Batch transaction authorisation**

(30) Priority: 26.06.2013 ZA 201304765
(71) Applicant: ENTERSEKT (PTY) LTD, 7600 Stellenbosch (ZA)
(72) Inventor: Brand, Christiaan Johannes Petrus, 7600 Stellenbosch (ZA); Van Tonder, Albertus Stefanus, 7600 Stellenbosch (ZA); Müller, Daniel Jacobus, 7600 Stellenbosch (ZA); Maritz, Gert Stephanus Herman, 7130 Somerset West (ZA)
(74) Representative: Hopkin, Tobias J.B.

(57) **Abstract**

A method and system (1000) for conducting batched transaction authorisations from a mobile device (1070) is disclosed. The method includes transmitting a batched transactions list including details of multiple transactions loaded against an account and awaiting authorisation, to the mobile device (1070), over a secure connection (1110) between an authentication server (1060) and the mobile device (1070), and receiving a batched transaction authorisation message from the mobile device over the secure connection including a positive or negative authorisation result in respect of two or more of the transactions in the batched transaction list, each authorisation result in the batched transaction authorisation message having been individually signed with a private key (1090) associated with a unique digital certificate (1080) of the mobile device (1070).

## Description

### FIELD OF THE INVENTION

This invention relates to the authorisation of online transactions. In particular, the invention relates to a method and system for conducting authorisation of batched transactions from a mobile device.

### BACKGROUND TO THE INVENTION

A significant number of commercial transactions are currently being conducted by way of online commerce. In particular, electronic bank payments have become the preferred way of conducting payments between transacting parties. Organisations and individuals alike conduct large numbers of banking transactions by way of online banking on a recurring, mostly monthly, basis, some of these transactions representing recurring payments and others once-off or intermittent payments.

As a result of the proliferation of online security breaches and, in particular, fraudulent transactions resulting from the breach of security measures to protect personal account information, various systems have been put in place to safeguard account owners against fraudulent transacting being conducted on their accounts. One such safeguard is a system by way of which each transaction that is requested against an account has to be independently verified by a trusted or authorised account user other than the user that has loaded the transaction details against the account. So, for example, a first individual may load payment transactions against an account, but the transactions will not be allowed to be processed before a second authorised account user has independently reviewed and authorised each of the transactions. Depending on the size of an organisation, the number of transactions that may be pre-loaded against an account and waiting to be authorised may be substantial.

In the case of personal bank accounts, a user may wish to load a number of different transactions during a single session, all of which are to be processed in a single "batched" transaction.

In order to authorise pre-loaded batched transactions, or load and process batched transactions on a bank account, the authorising user typically has to log onto the account with the bank through a secure online web portal. During the logon procedure the user is sent an out of band verification request, typically in the form of a verification code that has to be entered into the online portal, which has to be complied with to gain access to the account. Once access has been gained the authorised user is, in the majority of countries, allowed to authorise the pre-loaded batched transactions in batches, or load and process batched transaction without having to re-enter verification codes. To the applicant's knowledge it is not, however, possible to conduct bulk authorisations of pre-loaded transactions from the authorised user's mobile device, as mobile devices are subjected to stricter security requirements due to increased complexity in securing online communications conducted from them.

In some countries, however, the user may not be allowed to authorise more than one pre-loaded transaction or load and process more than one transaction while being logged in with the same out of band verification credentials. In these countries the user will typically be sent a new verification request for each transaction that has to be authorised or loaded and processed, as the case may be. This places an undesirable administrative burden on the user.

In the remainder of this specification the term "mobile device" should be interpreted to include any mobile communications device capable of communicating over a communications network, such as a cellular network, and having at least a limited amount of processing power. The term should be interpreted to specifically include all mobile or cellular phones but may also include tablet computers and the like.

### SUMMARY OF THE INVENTION

Embodiments of the invention provide a method for conducting batched transaction authorisations, the method being conducted at an authentication server and including the steps of:
establishing a secure connection over a telecommunication network between the authentication server and a mobile device of an authorised account user, the secure connection being established utilising a unique digital certificate resident on the mobile device;
transmitting a batched transactions list including details of multiple transactions loaded against the account and awaiting authorisation, to the mobile device over the secure connection;
receiving a batched transaction authorisation message from the mobile device over the secure connection including a positive or negative authorisation result in respect of two or more of the transactions in the batched transaction list, each authorisation result having been individually signed with a private key associated with the unique digital certificate of the mobile device; and
verifying each authorisation result in the batched authorisation message using a public key associated with the unique digital certificate.

Further features provide for the method to include the steps of receiving the batched transaction list as part of an authentication request from an online transaction host which hosts the account; and transmitting the verified authorisation results, individually or as a batched message, to the online transaction host upon completion of the verification.

A further feature provides for the unique digital certificate resident on the mobile device to have been previously issued to the mobile device by a trusted certificate authority.

The invention also provides a method of authorising batched transactions from a mobile device of an authorised user of an account, the method being conducted on the mobile device and including the steps of:
establishing a secure connection over a mobile communication network with an authentication server utilising a unique digital certificate associated with and resident on the mobile device;
receiving a batched transactions list including details of multiple transactions loaded against the account and awaiting authorisation, from the authentication server over the secure connection;
separately displaying the details of two or more of the transactions in the batched transaction list, each in a designated area of a display of the mobile device;
receiving input from the user indicating an approval or rejection of two or more of the displayed transactions and storing each approval or rejection of a transaction as an authorisation result;
individually signing each authorisation result with a private key associated with the unique digital certificate; and
transmitting the signed authorisation results to the authentication server over the secure connection, either individually or as a batched transaction authorisation message.

Further features provide for the step of displaying the details of the transactions to include displaying them on a touch-operated display of the mobile device; for the step of receiving the user input to include receiving a finger swipe by the user over the designated area displaying the transaction details, a finger swipe in a first direction indicating an approval of the transaction and a finger swipe in a second, preferably opposite direction indicating a rejection of the transaction; and transmitting the signed authorisation messages or batched transaction authorisation message, as the case may be, to the authorisation server upon receiving a completion confirmation input from the user.

A still further feature provides for the step of receiving the user input to include receiving a press-and-hold input by the user over a designated area on the touch-operated display, the press-and-hold input indicating an approval of all the transactions displayed on the display at that time or, alternatively, all the transaction included in the batched transaction list.

A further feature provides for the unique digital certificate to have previously been issued to the mobile device by a trusted certificate authority.

The invention still further provides a system for conducting batched transaction authorisations, comprising:
a mobile device of an authorised account user, the mobile device having a unique digital certificate resident on it;
an online transaction host with which the account is held; and
an authentication server with which the mobile device and the digital certificate are registered, the authentication server being configured to: receive a batched transaction list including details of multiple transactions loaded against the account and awaiting authorisation from the online transaction host; establish a secure connection with the mobile device or an application operating on it using the mobile device digital certificate; transmit the batched transaction list to the mobile device over the secure connection; and to receive signed authorisation messages relating to two or more of the transactions from the mobile device over the secure connection, either individually or as a batched transaction authorisation.

A further feature provides for the digital certification to have been previously issued to the mobile device by a trusted certificate authority.

Further features provide for the batched transaction authorisation message to include a positive or negative authorisation result in respect of two or more of the transactions in the batched transaction list; and for each authorisation result to have been individually signed a private key associated with the unique digital certificate of the mobile device.

A still further feature provides for the mobile device to have an application operating on it which is configured to: establish the secure connection with the authentication server; receive the batched transaction list over the secure connection; display the details of two or more of the transactions in the batched transaction list on a display of the mobile device, each in a designated area of the display; receive input from the user indicating an approval or rejection of two or more of the displayed transactions; store each approval or rejection of a transaction as an authorisation result;
individually sign each authorisation result with the private key associated with the unique digital certificate; batch the individually signed authorisation results in the batched transaction authorisation message; and transmit the batched transaction authorisation message to the authentication server over the secure connection.

Yet further features provide for the application to be further configured to identify a finger swipe by the user over the designated area displaying the transaction details as the input and to identify a finger swipe in a first direction as an approval of the transaction and a finger swipe in a second, preferably opposite direction as a rejection of the transaction.

The invention also provides a computer program product for conducting batched transaction authorisations, the computer program product comprising a computer-readable storage medium having computer-readable program code configured to:
establish a secure connection over a telecommunication network between the authentication server and a mobile device of an authorised account user, the secure connection being established utilising a unique digital certificate resident on the mobile device;
transmit a batched transactions list including details of multiple transactions loaded against the account and awaiting authorisation, to the mobile device over the secure connection;
receive a batched transaction authorisation message from the mobile device over the secure connection including a positive or negative authorisation result in respect of two or more of the transactions in the batched transaction list, each authorisation result having been individually signed with a private key associated with the unique digital certificate of the mobile device; and
verify each authorisation result in the batched authorisation message using a public key associated with the unique digital certificate.

The invention also provides a computer program product for conducting batched transaction authorisations, the computer program product comprising a computer-readable storage medium having computer-readable program code configured to:
establish a secure connection over a mobile communication network with an authentication server utilising a unique digital certificate associated with and resident on the mobile device;
receive a batched transactions list including details of multiple transactions loaded against the account and awaiting authorisation, from the authentication server over the secure connection;
separately display the details of two or more of the transactions in the batched transaction list, each in a designated area of a display of the mobile device;
receive input from the user indicating an approval or rejection of two or more of the displayed transactions and storing each approval or rejection of a transaction as an authorisation result;
individually sign each authorisation result with a private key associated with the unique digital certificate; and
transmit the signed authorisation results to the authentication server over the secure connection, either individually or as a batched transaction authorisation message.

Further features provide for the computer program product to comprise a non-transient computer-readable storage medium.

In order for the invention to be more fully understood, implementations thereof will now be described with reference to the accompanying drawings.

### BRIEF DESCRIPTION OF THE DRAWINGS

In the drawings:-
- Figure 1: is a schematic illustration of a system for conducting batched transaction authorisations from a mobile device according to the invention;
- Figure 2: is a block diagram illustrating the operation of a method of conducting batched transaction authorisations according to the invention;
- Figure 3: illustrates the loading of batched transactions on an online banking website;
- Figure 4: illustrates an online selection of pre-loaded transactions for authorisation;
- Figure 5: illustrates a batched transaction list displayed on the display of a touch-operated mobile device;
- Figure 6: illustrates the batched transaction list of Figure 5 after a user has individually approved or rejected the transactions;
- Figure 7: illustrates an authorisation confirmation request displayed on the display of a mobile device;
- Figure 8: illustrates the result of a batched transaction authorisation conducted from a mobile device displayed on the online banking website of Figure 3;
- Figure 9: illustrates a block diagram of a computing device that can be used in various embodiments of the present invention; and
- Figure 10: illustrates a block diagram of a mobile device that can be used in various embodiments of the present invention.

### DETAILED DESCRIPTION WITH REFERENCE TO THE DRAWINGS

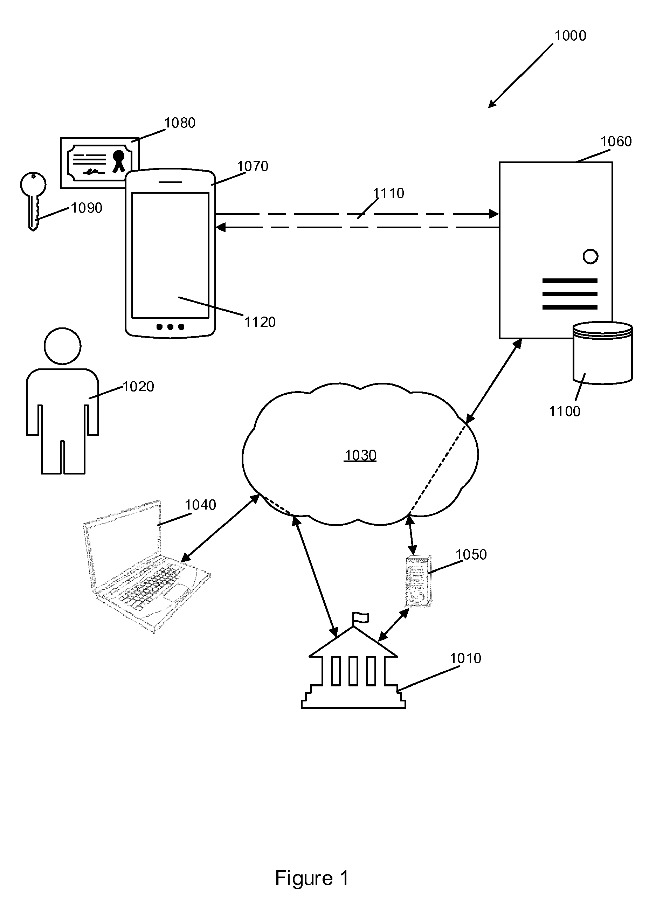

A system (1000) for conducting batched transaction authorisations according to an embodiment of the invention is shown in Figure 1. The system (1000) includes an online transaction host (1010), which hosts an account with which a user (1020) of the system (1000) is authorised to transact. In general, interaction between the user (1020) and the transaction host (1010) is conducted over a communication network such as the Internet (1030), from any Internet enabled device such as, for example, a laptop or other personal computer (1040), through a web portal hosted by a web server (1050) associated with the transaction host (1010).

The system (1000) further includes an authentication server (1060) with which the transaction host (1010) as well as a mobile device (1070), in this example a mobile phone, of the user (1020) is registered. During registration of the user's mobile device (1070) with the authentication server (1060), an application is installed on the mobile device (1070) and a unique digital certificate (1080) containing a private (not shown) and public key (1090) pair is issued to the mobile device (1070). As with all standard Public Key Infrastructure (PKI) protocols, the private key associated with the certificate (1080) is only known to the mobile device (1070) and the associated public key (1090) is available for verification purposes to third parties. The digital certificate (1080) is resident on the mobile device (1070), preferably stored in a secure storage location on the device. The authentication server (1060) also holds a database (1100) in which identifiers and other details of registered users are stored. The authentication server (1060) is configured to establish a secure connection (1110) with the mobile device (1070) application over a telecommunication network using the digital certificate (1080).

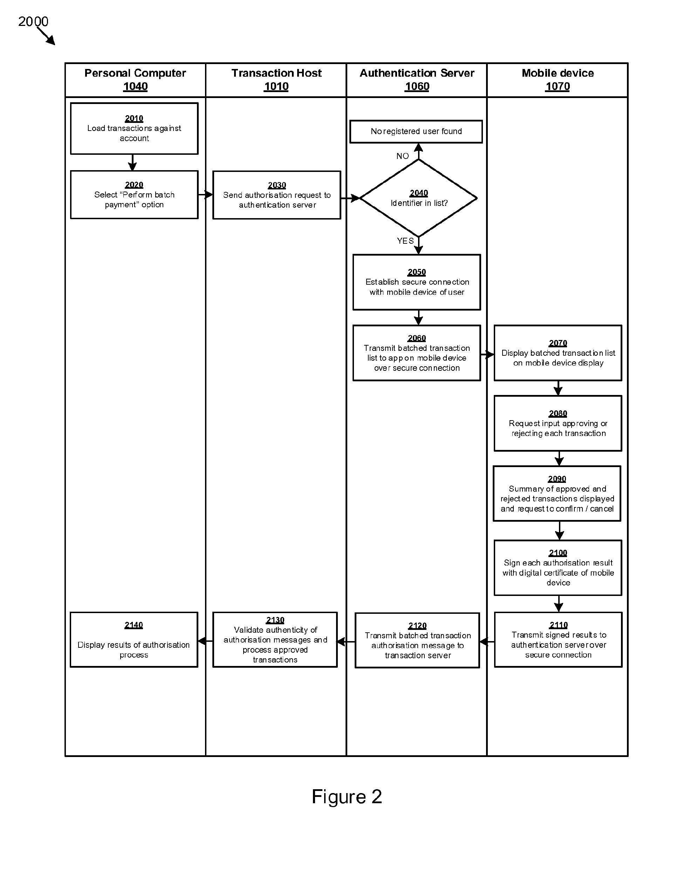

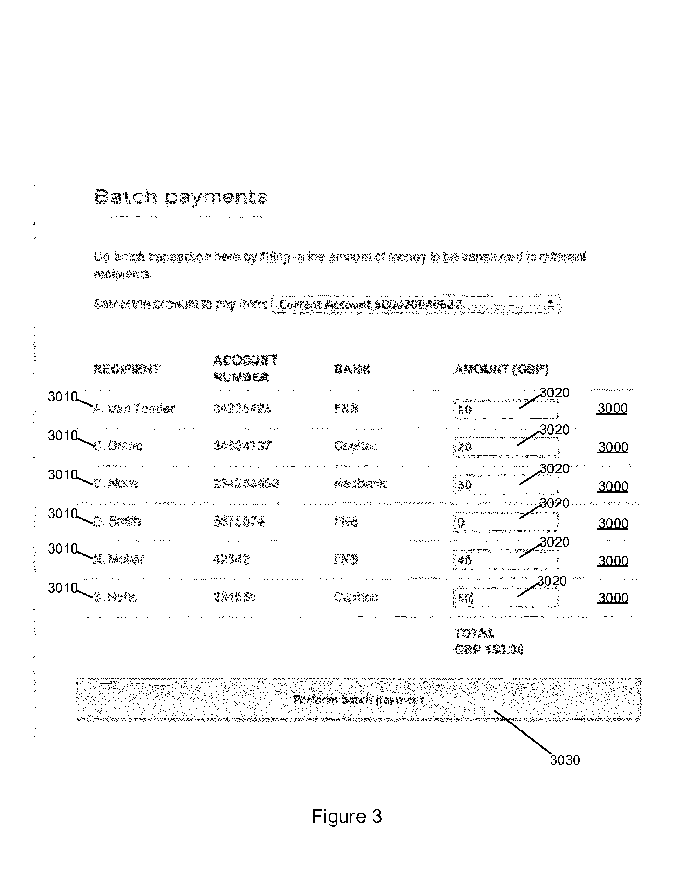

A block diagram (2000) of a method of using the system (1000) of Figure 1 is shown in Figure 2. The various steps of the method are explained here with reference to Figures 3 to 8, which will be referred to in turn. At a first step (2010), the user (1020), or an alternative user having the requisite authorisation to load transactions against the account, loads transactions against the account from the personal computer (1040) over a web interface provided by the web server (1050) of the transaction host (1010). As shown in Figure 3, the transactions (3000) may relate to a number of payments in favour of a number of different beneficiaries (3010) set up on the online account. Once the beneficiaries have been loaded against the account, the user (1020) is able to enter numerous amounts (3020) to be paid to the different beneficiaries (3010) during a single transaction session. Once the transactions (3000) have been loaded, they are stored against the account but are not yet processed. To perform a batch payment operation the user is required to select a "Perform batch payment" option (3030) displayed on the interface, at step (2020).

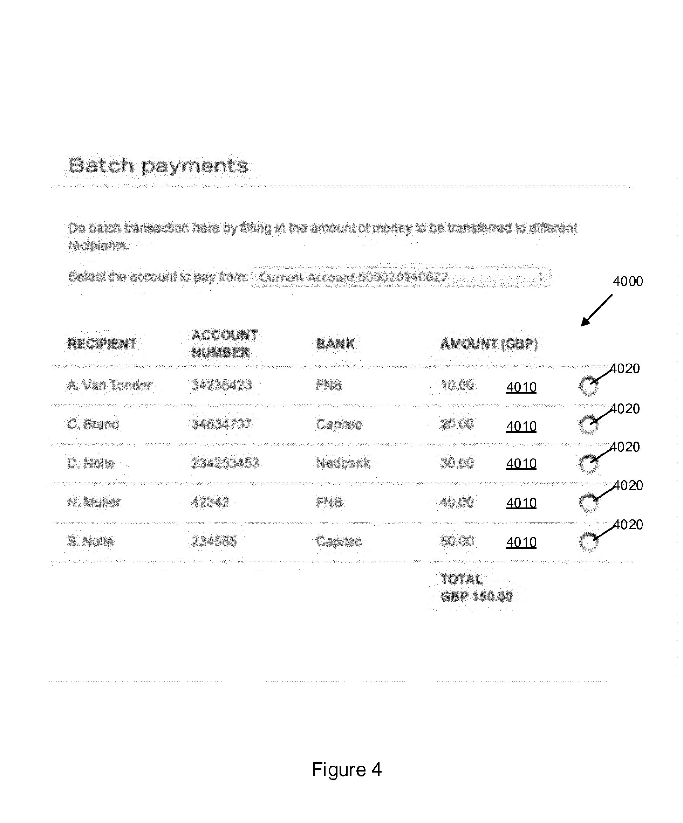

The user (1020) is then presented on the web interface with a list (4000) of the loaded transactions (4010) as shown in Figure 4, with a processing indicator (4020) displayed next to each transaction (4010), indicating that the transactions are in the process of being authorised. Details of the transactions (4010) by which they may be identified including, for example, the beneficiary, action to be performed and amount of the transaction, are then compiled into a batched transaction list.

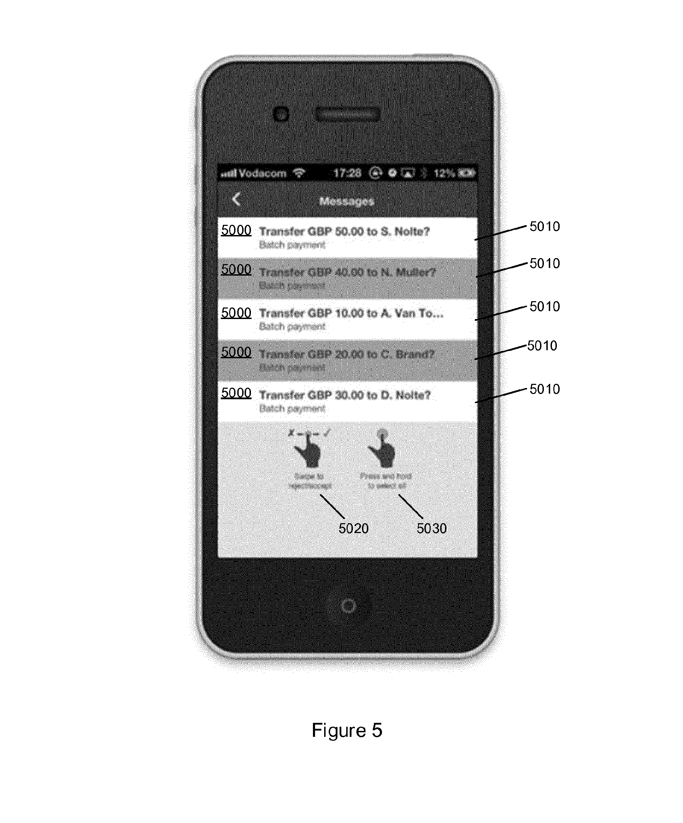

At step (2030), the transaction host (1010) sends an authorisation request including the batched transaction list to the authentication server (1060). The authorisation request also includes an identifier of the authorised user tasked with authorising the batched transactions. At step (2040), the authentication server (1060) looks up the identifier in the database (1100) of registered users and, if found, establishes a secure connection (1110) with the application on the mobile device (1070) of the identified user at step (2050). The secure connection is established by way of mutual handshakes and certificate and/or other key exchanges between the authentication server (1060) and mobile phone application. Once the secure connection (1110) has been established, the authentication server (1060) transmits the batched transaction list to the application over the secure connection at step (2060), which in turn displays it on the display (1120) of the mobile device (1070) at step (2070), as shown in Figure 5. Each pre-loaded transaction (5000) against the account as contained in the batched transaction list, is displayed to the user separately and in a designated area (5010) of the display (1120), in a way that the user is able to easily read and verify the details of the transaction (5000). The display (1120) of the device in the current example is touch-operated.

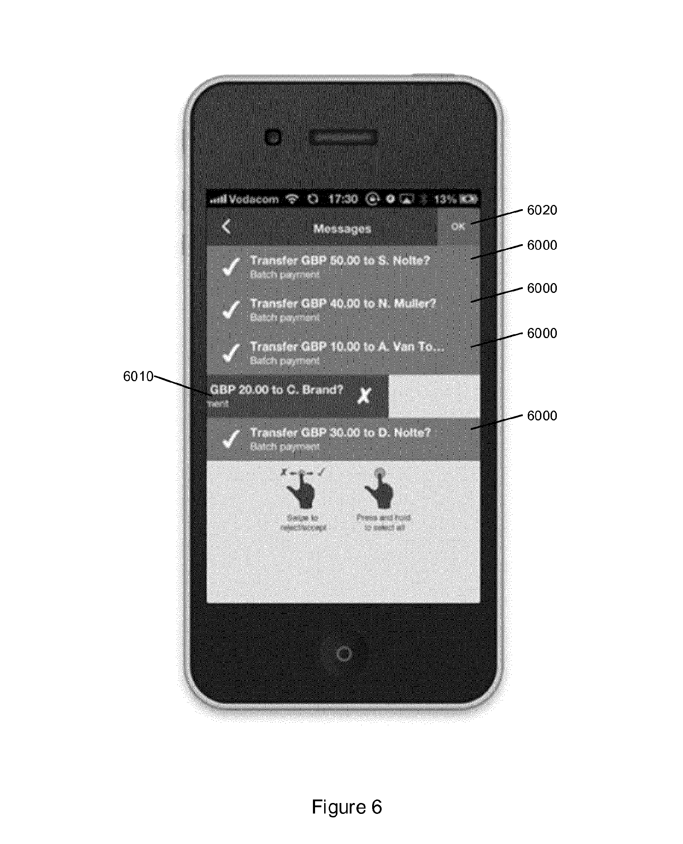

At step (2080), an icon (5020) on the display instructs the user to provide an input in respect of each transaction to either approve or reject the transaction. By swiping his or her finger across the designated area (5010) of an applicable transaction from left to right, the user indicates that the transaction is approved. By swiping his or her finger over the designated area (5010) of a transaction from right to left, the user indicates that the transaction is rejected. Alternatively, a user may press and hold anywhere on the display, or on an indicated designated area, for a predetermined amount of time to accept all of the displayed transactions as indicated by a second icon (5030). The approval or rejection of each transaction (5000) is stored in an authorisation result and, upon receiving the approval or rejection instruction, the applicable transaction is highlighted in a corresponding colour as shown in Figure 6, preferably green for approved transactions (6000) and red for rejected transactions (6010). Once the user has finished approving or rejecting the transactions, as the case may be, he or she instructs the application to proceed. This can, for example, be done by the user pressing an "OK" (6020), or similar, button or icon.

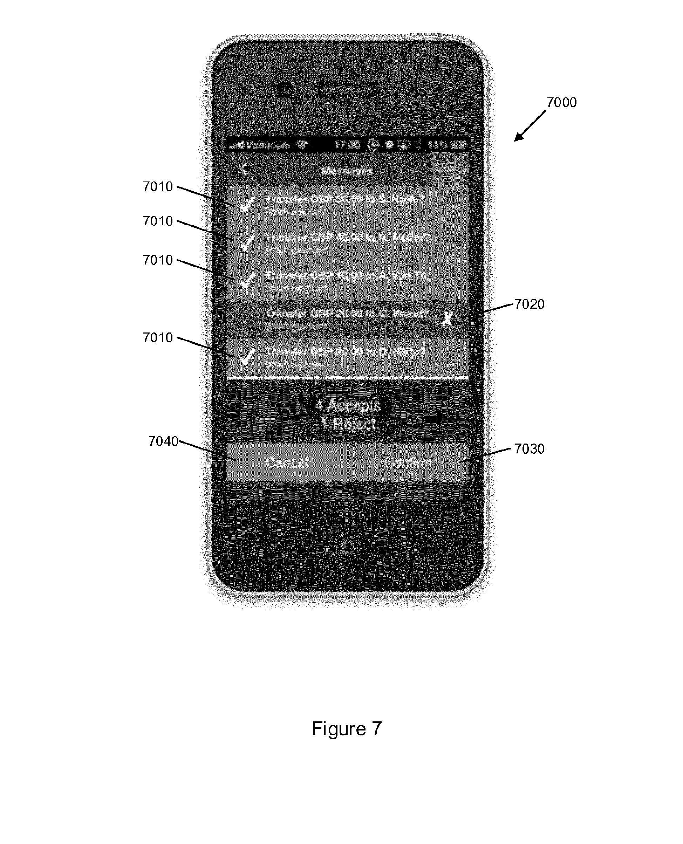

At a next step (2090), and as shown in Figure 7, a summary (7000) of the approvals and rejections of the various transactions, as the case may be, is displayed to the user on the display (1120). As before, approved transactions (7010) are clearly visually differentiated from rejected transactions (7020) and the user is requested to confirm his or her selection by pressing in a designated area (7030) which could be designated by the word "confirm" or something similar, or cancel the authorisation and revert to the previous step by pressing an alternative area (7040) which could be designated by the word "cancel" or something similar.

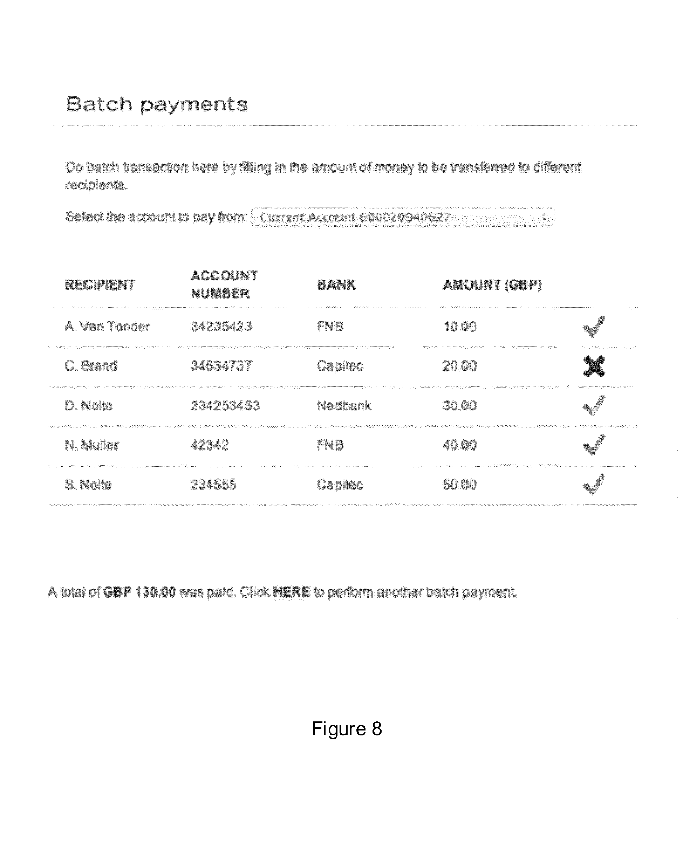

Upon receiving confirmation of the authorisation of the transactions, the application individually signs each of the authorisation results with the private key associated with the mobile device digital certificate (1080) at step (2100), and transmits the signed authorisation results back to the authentication server (1060) over the secure connection (1110), either individually or as a batched transaction authorisation message at step (2110). The authentication server (1060) in turn transmits the batched transaction authorisation message back to the transaction host (1010) server at step (2120), which is then able to validate the authenticity of the individually signed authorisation messages using the mobile device certificate public key (1090), and process the approved transactions at step (2130). Finally, at step (2140), the transaction server displays the results of the authorisation process to the user (1020) on the web interface as shown in Figure 8.

The system and method of the invention therefore makes it possible for an online transaction host such as a bank, to enable authorised users to unambiguously authorise batched transactions from their mobile devices. With the use of the authentication server the transaction host is assured that the user authorising the transaction is who he or she purports to be and therefore alleviates the need to initialise new verification requests in respect of each transaction that has to be authorised.

It is foreseen that the public/private key pair can be generated by the phone in cases where it has sufficient processing power to enable it to do so, or it can be issued to the phone by an independent certificate authority at a prior enrolment step.

Any of the steps, operations, or processes described herein may be performed or implemented with one or more hardware or software modules, alone or in combination with other devices. In one embodiment, a software module is implemented with a computer program product comprising a computer-readable medium containing computer program code, which can be executed by a computer processor for performing any or all of the steps, operations, or processes described.

Although in the above description, a mobile phone has been used as an example of a mobile device, it would be appreciated that any other mobile device may be used, including, but not limited to, a tablet computer, a personal digital assistant, or the like.

Furthermore, the exact method or process steps described, as the case may be, do not all have to occur in the order described. A key aspect of the described invention is the fact that each authorisation result pertaining to the batched transaction list is individually signed by the application resident on the mobile device, and transmitted back to the authentication server.

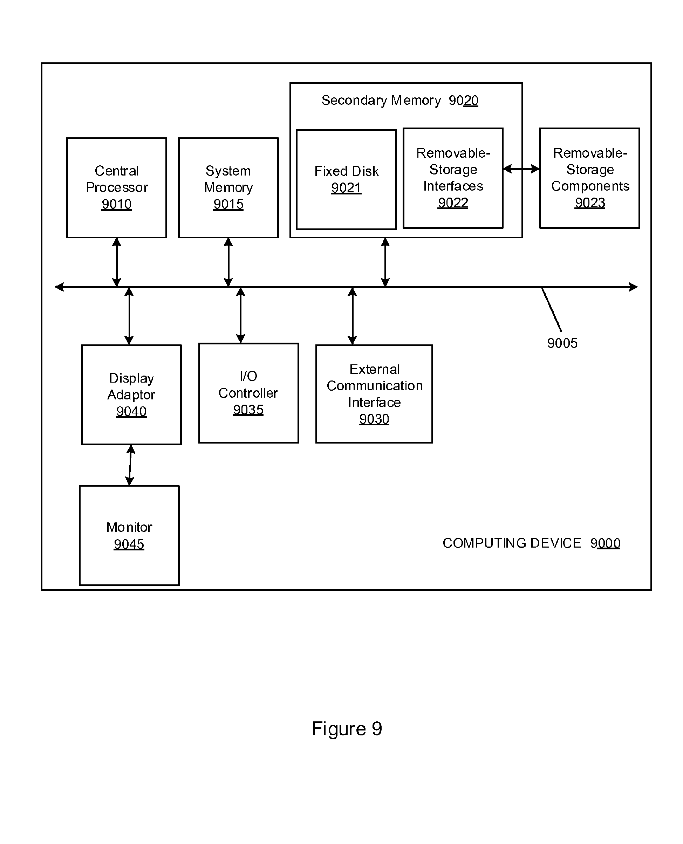

Figure 9 illustrates an example of a computing device (9000) in which various aspects of the disclosure may be implemented, for example, the authentication server. The computing device (9000) may be suitable for storing and executing computer program code. The various participants and elements in the previously described system diagrams may use any suitable number of subsystems or components of the computing device (9000) to facilitate the functions described herein.

The computing device (9000) may include subsystems or components interconnected via a communication infrastructure (9005) (for example, a communications bus, a cross-over bar device, or a network). The computing device (9000) may include at least one central processor (9010) and at least one memory component in the form of computer-readable media.

The memory components may include system memory (9015), which may include read only memory (ROM) and random access memory (RAM). A basic input/output system (BIOS) may be stored in ROM. System software may be stored in the system memory (9015) including operating system software.

The memory components may also include secondary memory (9020). The secondary memory (9020) may include a fixed disk (9021), such as a hard disk drive, and, optionally, one or more removable-storage interfaces (9022) for removable-storage components (9023).

The removable-storage interfaces (9022) may be in the form of removable-storage drives (for example, magnetic tape drives, optical disk drives, floppy disk drives, etc.) for corresponding removable-storage components (for example, a magnetic tape, an optical disk, a floppy disk, etc.), which may be written to and read by the removable-storage drive.

The removable-storage interfaces (9022) may also be in the form of ports or sockets for interfacing with other forms of removable-storage components (9023) such as a flash memory drive, external hard drive, or removable memory chip, etc.

The computing device (9000) may include an external communications interface (9030) for operation of the computing device (9000) in a networked environment enabling transfer of data between multiple computing devices (9000). Data transferred via the external communications interface (9030) may be in the form of signals, which may be electronic, electromagnetic, optical, radio, or other types of signal.

The external communications interface (9030) may enable communication of data between the computing device (9000) and other computing devices including servers and external storage facilities. Web services may be accessible by the computing device (9000) via the communications interface (9030).

The external communications interface (9030) may also enable other forms of communication to and from the computing device (9000) including, voice communication, near field communication, Bluetooth, etc.

The computer-readable media in the form of the various memory components may provide storage of computer-executable instructions, data structures, program modules, and other data. A computer program product may be provided by a computer-readable medium having stored computer-readable program code executable by the central processor (9010).

A computer program product may be provided by a non-transient computer-readable medium, or may be provided via a signal or other transient means via the communications interface (9030).

Interconnection via the communication infrastructure (9005) allows a central processor (9010) to communicate with each subsystem or component and to control the execution of instructions from the memory components, as well as the exchange of information between subsystems or components.

Peripherals (such as printers, scanners, cameras, or the like) and input/output (I/O) devices (such as a mouse, touchpad, keyboard, microphone, joystick, or the like) may couple to the computing device (9000) either directly or via an I/O controller (9035). These components may be connected to the computing device (9000) by any number of means known in the art, such as a serial port.

One or more monitors (9045) may be coupled via a display or video adapter (9040) to the computing device (9000).

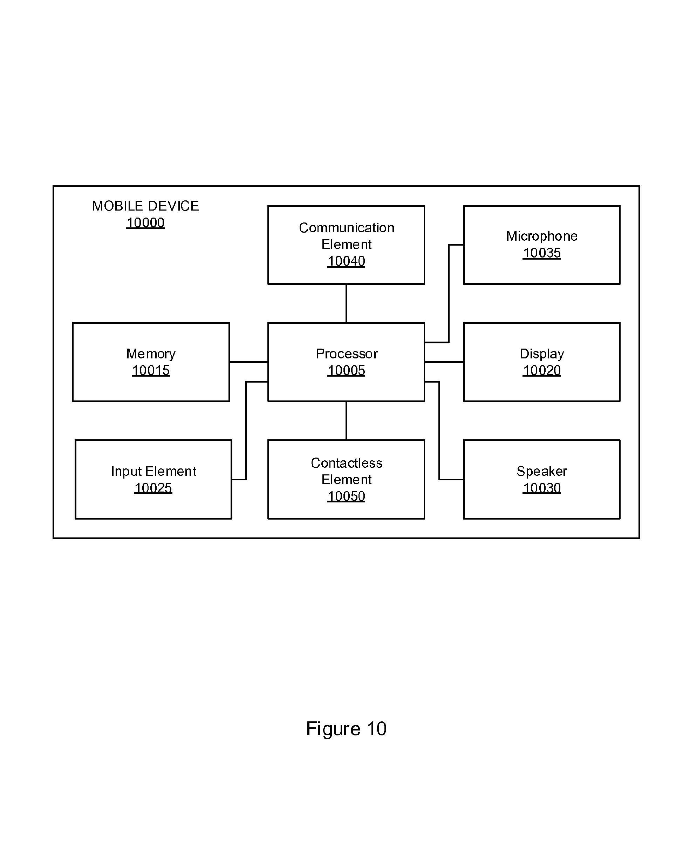

Figure 10 shows a block diagram of a mobile device (10000) that may be used in embodiments of the disclosure. The mobile device (10000) may be a cell phone, a feature phone, a smart phone, a satellite phone, or a computing device having a phone capability.

The mobile device (10000) may include a processor (10005) (e.g., a microprocessor) for processing the functions of the mobile device (10000) and a display (10020) to allow a user to see the phone numbers and other information and messages. The mobile device (10000) may further include an input element (10025) to allow a user to input information into the device (e.g., input buttons, touch screen, etc.), a speaker (10030) to allow the user to hear voice communication, music, etc., and a microphone (10035) to allow the user to transmit his or her voice through the mobile device (10000).

The processor (10005) of the mobile device (10000) may connect to a memory (10015). The memory (10015) may be in the form of a computer-readable medium that stores data and, optionally, computer-executable instructions.

The mobile device (10000) may also include a communication element (10040) for connection to communication channels (e.g., a cellular telephone network, data transmission network, Wi-Fi network, satellite-phone network, Internet network, Satellite Internet Network, etc.). The communication element (10040) may include an associated wireless transfer element, such as an antenna.

The communication element (10040) may include a subscriber identity module (SIM) in the form of an integrated circuit that stores an international mobile subscriber identity and the related key used to identify and authenticate a subscriber using the mobile device (10000). One or more subscriber identity modules may be removable from the mobile device (10000) or embedded in the mobile device (10000).

The mobile device (10000) may further include a contactless element (10050), which is typically implemented in the form of a semiconductor chip (or other data storage element) with an associated wireless transfer element, such as an antenna. The contactless element (10050) may be associated with (e.g., embedded within) the mobile device (10000) and data or control instructions transmitted via a cellular network may be applied to the contactless element (10050) by means of a contactless element interface (not shown). The contactless element interface may function to permit the exchange of data and/or control instructions between mobile device circuitry (and hence the cellular network) and the contactless element (10050).

The contactless element (10050) may be capable of transferring and receiving data using a near field communications (NFC) capability (or near field communications medium) typically in accordance with a standardized protocol or data transfer mechanism (e.g., ISO 14443/NFC). Near field communications capability is a short-range communications capability, such as radio-frequency identification (RFID), Bluetooth, infra-red, or other data transfer capability that can be used to exchange data between the mobile device (10000) and an interrogation device. Thus, the mobile device (10000) may be capable of communicating and transferring data and/or control instructions via both a cellular network and near field communications capability.

The data stored in the memory (10015) may include: operation data relating to the operation of the mobile device (10000), personal data (e.g., name, date of birth, identification number, etc.), financial data (e.g., bank account information, a bank identification number (BIN), credit or debit card number information, account balance information, expiration date, loyalty provider account numbers, etc.), transit information (e.g., as in a subway or train pass), access information (e.g., as in access badges), etc. A user may transmit this data from the mobile device (10000) to selected receivers.

The mobile device (10000) may be, amongst other things, a notification device that can receive alert messages and access reports, a portable merchant device that can be used to transmit control data identifying a discount to be applied, as well as a portable consumer device that can be used to make payments.

The foregoing description of the embodiments of the invention has been presented for the purpose of illustration; it is not intended to be exhaustive or to limit the invention to the precise forms disclosed. Persons skilled in the relevant art can appreciate that many modifications and variations are possible in light of the above disclosure.

Some portions of this description describe the embodiments of the invention in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as modules, without loss of generality. The described operations and their associated modules may be embodied in software, firmware, hardware, or any combinations thereof.

The software components or functions described in this application may be implemented as software code to be executed by one or more processors using any suitable computer language such as, for example, Java, C++, or Perl using, for example, conventional or object-oriented techniques. The software code may be stored as a series of instructions, or commands on a non-transitory computer-readable medium, such as a random access memory (RAM), a read-only memory (ROM), a magnetic medium such as a hard-drive or a floppy disk, or an optical medium such as a CD-ROM. Any such computer-readable medium may also reside on or within a single computational apparatus, and may be present on or within different computational apparatuses within a system or network.

Any of the steps, operations, or processes described herein may be performed or implemented with one or more hardware or software modules, alone or in combination with other devices. In one embodiment, a software module is implemented with a computer program product comprising a non-transient computer-readable medium containing computer program code, which can be executed by a computer processor for performing any or all of the steps, operations, or processes described.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based hereon. Accordingly, the disclosure of the embodiments of the invention is intended to be illustrative, but not limiting, of the scope of the invention, which is set forth in the following claims.

## Claims

1. A method (2000) for conducting batched transaction authorisations, the method being conducted at an authentication server (1060) and including the steps of:
establishing (2050) a secure connection (1110) over a telecommunication network between the authentication server (1060) and a mobile device (1070) of an authorised account user (1020), the secure connection being established utilising a unique digital certificate (1080) resident on the mobile device (1070);
transmitting (2060) a batched transactions list including details of multiple transactions loaded against the account and awaiting authorisation, to the mobile device (1070) over the secure connection (1110);
receiving (2120) a batched transaction authorisation message from the mobile device (1070) over the secure connection including a positive or negative authorisation result in respect of two or more of the transactions in the batched transaction list, each authorisation result having been individually signed (2100) with a private key (1090) associated with the unique digital certificate (1080) of the mobile device (1070); and
verifying each authorisation result in the batched authorisation message using a public key associated with the unique digital certificate.

2. A method as claimed in claim 1, which includes the steps of receiving the batched transaction list as part of an authentication request from an online transaction host (1010) which hosts the account and transmitting the verified authorisation results to the online transaction host upon completion of the verification.

3. A method as claimed as claimed in claim 1 or claim 2, wherein the unique digital certificate resident on the mobile device was previously issued to the mobile device by a trusted certificate authority.

4. A method of authorising batched transactions from a mobile device (1070) of an authorised user (1020) of an account, the method being conducted on the mobile device (1070) and including the steps of:
establishing a secure connection (1110) over a mobile communication network with an authentication server (1060) utilising a unique digital certificate (1080) associated with and resident on the mobile device (1070);
receiving a batched transactions list including details of multiple transactions loaded against the account and awaiting authorisation, from the authentication server (1060) over the secure connection;
separately displaying the details of two or more of the transactions in the batched transaction list, each in a designated area of a display (1120) of the mobile device (1070);
receiving input from the user indicating an approval or rejection of two or more of the displayed transactions and storing each approval or rejection of a transaction as an authorisation result;
individually signing each authorisation result with a private key (1090) associated with the unique digital certificate; and
transmitting the signed authorisation results to the authentication server (1060) over the secure connection (1110), either individually or as a batched transaction authorisation message.

5. A method as claimed in claim 4, wherein the step of displaying the details of the transactions includes displaying them on a touch-operated display of the mobile device.

6. A method as claimed in claim 4 or claim 5, wherein the step of receiving the user input includes receiving a finger swipe by the user over the designated area displaying the transaction details, a finger swipe in a first direction indicating an approval of the transaction and a finger swipe in a second direction indicating a rejection of the transaction.

7. A method as claimed in any one of claims 4 to 6, wherein the step of transmitting the signed authorisation results to the authentication server (1060) is conducted pursuant to receiving a completion confirmation input from the user (1020).

8. A method as claimed in any one of claims 5 to 7, wherein the step of receiving input from the user (1020) includes receiving a press-and-hold input by the user over a designated area on the touch-operated display, the press-and-hold input indicating an approval of all the transactions displayed on the display (1120) at that time or all transaction included in the batched transaction list.

9. A method as claimed in any one of claims 4 to 8, wherein the unique digital certificate has previously been issued to the mobile device by a trusted certificate authority.

10. A system (1000) for conducting batched transaction authorisations, comprising:
a mobile device (1070) of an authorised account user (1020), the mobile device having a unique digital certificate (1080) resident on it;
an online transaction host (1010) with which the account is held; and
an authentication server (1060) with which the mobile device (1070) and the digital certificate (1080) are registered, the authentication server (1060) being configured to:
receive a batched transaction list including details of multiple transactions loaded against the account and awaiting authorisation from the online transaction host;
establish a secure connection (1110) with the mobile device (1070) using the mobile device digital certificate (1080);
transmit the batched transaction list to the mobile device (1070) over the secure connection (1110); and
receive signed authorisation messages relating to two or more of the transactions from the mobile device (1070) over the secure connection (1110).

11. A system (1000) as claimed in claim 10, wherein the secure connection (1110) with the mobile device (1070) is established with an application operating on the mobile device.

12. A system (1000) as claimed in claim 11, wherein the application is configured to:
establish the secure connection (1110) with the authentication server (1060);
receive the batched transaction list over the secure connection;
display the details of two or more of the transactions in the batched transaction list on a display (1120) of the mobile device, each in a designated area of the display;
receive input from the user indicating an approval or rejection of two or more of the displayed transactions;
store each approval or rejection of a transaction as an authorisation result;
individually sign each authorisation result with a private key (1090) associated with the unique digital certificate (1080);
batch the individually signed authorisation results into a batched transaction authorisation message; and
transmit the batched transaction authorisation message to the authentication server (1060) over the secure connection (1110).

13. A system (1000) as claimed in claim 11 or 12, wherein the application is configured to identify a finger swipe by the user over the designated area displaying the transaction details as the input, and to identify a finger swipe in a first direction as an approval of the transaction and a finger swipe in a second direction as a rejection of the transaction.

14. A computer program product for conducting batched transaction authorisations, the computer program product comprising a computer-readable storage medium having computer-readable program code configured to:
establish a secure connection over a telecommunication network between the authentication server and a mobile device of an authorised account user, the secure connection being established utilising a unique digital certificate resident on the mobile device;
transmit a batched transactions list including details of multiple transactions loaded against the account and awaiting authorisation, to the mobile device over the secure connection;
receive a batched transaction authorisation message from the mobile device over the secure connection including a positive or negative authorisation result in respect of two or more of the transactions in the batched transaction list, each authorisation result having been individually signed with a private key associated with the unique digital certificate of the mobile device; and
verify each authorisation result in the batched authorisation message using a public key associated with the unique digital certificate.

15. A computer program product for conducting batched transaction authorisations, the computer program product comprising a computer-readable storage medium having computer-readable program code configured to:
establish a secure connection over a mobile communication network with an authentication server utilising a unique digital certificate associated with and resident on the mobile device;
receive a batched transactions list including details of multiple transactions loaded against the account and awaiting authorisation, from the authentication server over the secure connection;
separately display the details of two or more of the transactions in the batched transaction list, each in a designated area of a display of the mobile device;
receive input from the user indicating an approval or rejection of two or more of the displayed transactions and storing each approval or rejection of a transaction as an authorisation result;
individually sign each authorisation result with a private key associated with the unique digital certificate; and
transmit the signed authorisation results to the authentication server over the secure connection, either individually or as a batched transaction authorisation message.
